(19) **Europäisches Patentamt**
**European Patent Office**
**Office européen des brevets**

(11) **EP 3 910 459 B1**

(12) **EUROPEAN PATENT SPECIFICATION**

(45) Date of publication and mention
of the grant of the patent:
**10.12.2025 Bulletin 2025/50**

(21) Application number: **21172356.4**

(22) Date of filing: **05.05.2021**

(51) International Patent Classification (IPC):
**G06F 3/0481** *(2022.01)* **G06F 3/0484** *(2022.01)*
**G06F 8/38** *(2018.01)* **G06F 9/451** *(2018.01)*

(52) Cooperative Patent Classification (CPC):
**G06F 3/04817; G06F 3/04847; G06F 8/38**

(54) **SYSTEMS AND METHODS FOR GENERATING CONSISTENT USER INTERFACES ACROSS MULTIPLE COMPUTING PLATFORMS**

SYSTEME UND VERFAHREN ZUR ERZEUGUNG KONSISTENTER BENUTZERSCHNITTSTELLEN ÜBER MEHRERE RECHENPLATTFORMEN HINWEG

SYSTÈMES ET PROCÉDÉS DE GÉNÉRATION D'INTERFACES UTILISATEUR COHÉRENTES SUR DE MULTIPLES PLATEFORMES DE CALCUL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **13.05.2020 US 202063024186 P**
**17.06.2020 US 202016904092**

(43) Date of publication of application:
**17.11.2021 Bulletin 2021/46**

(73) Proprietor: **CBS Interactive Inc.**
**San Francisco, CA 94105 (US)**

(72) Inventors:
• **NAGL, Alexander**
**San Francisco, 94105 (US)**
• **BHOITE, Swapnil**
**San Francisco, 94105 (US)**
• **KOHLI, Yogesh**
**San Francisco, 94105 (US)**

(74) Representative: **Horler, Philip John et al**
**Withers & Rogers LLP**
**2 London Bridge**
**London SE1 9RA (GB)**

(56) References cited:
**EP-A1- 2 124 142 US-A1- 2006 015 823**
**US-A1- 2008 222 560 US-A1- 2017 286 068**

**Description**

CROSS-REFERENCE TO RELATED APPLICATIONS

The present application claims priority from US Provisional Patent Application Ser. No. 63/024186 filed on May 13, 2020.

COPYRIGHT STATEMENT

A portion of the disclosure of this patent document contains material which is subject to copyright protection. The copyright owner has no objection to the facsimile reproduction by anyone of the patent document or the patent disclosure, as it appears in the Patent and Trademark Office patent file or records, but otherwise reserves all copyright rights whatsoever.

FIELD OF THE DISCLOSURE

The present disclosure relates to systems and methods for generating a consistent user interface across multiple platforms facilitating navigation by the user amongst plural icons displayed in the user interface.

BACKGROUND

Recently Internet Protocol TV (IPTV) has become very popular. There is a growing trend to "cut the cable", i.e. replace set-top cable boxes with internet connected computing devices such as Apple TV™ Android TV™ and Fire TV™. Other devices include smart televisions such as Samsung Smart TV™ and game consoles such as XBox™. Each of these platforms provides an "over the top" (OTT) experience whereby users can receive television programming, and other services, over an internet connection.

Various content providers now make their content available over these platforms and other IPTV platforms. Each platform has a corresponding SDK for presenting content selections in a user interface. It has become a *de facto* standard to present the content selections in a user interface in which each item of content is represented by an icon, in at least one row of icons, and a selected icon is dynamically enlarged, i.e. put in "focus". However, there is no standard for the dimensions of icons and other layout attributes. For example, each platform has a different algorithm for enlarging icons and other variables in accordance with the SDK of that platform. This results in a complex situation if a content provider wants to maintain a consistent look and feel across the different platforms with respect to the number of icons in a row, the spacing of icons, side bar dimension, margins, the spacing between a focused icon and adjacent icons and the like.

For example, placing a specific predetermined number of icons in a row horizontally across a default screen of each platform will result in a very different look and feel on each platform. For example, in some platforms, the focused icons could overlap adjacent icons to a large degree which could result in poor esthetics. To further complicate matters, the icons are often either a "poster" icon (for movies) or a video icon (for other video content). Poster icons typically have an aspect ratio of 1:2 and video icons typically have an aspect ratio of 16:9.

EP2124142 describes a user interface generator comprising a UI template selecting section for selecting the user interface template data from service description data describing service that the user utilizes and terminal data expressing the state of a terminal device that the user utilizes and a UI description generating section for generating the user interface from the service description data and the user interface template data selected by the UI template selecting section. This provides a method for using a template to flexibly generate a user interface and a user interface generator using the same.

SUMMARY

The current state of the art requires that content providers generate page layouts to specify the number, size, and spacing of icons and other user interface elements for each platform individually and iteratively compare and adjust the user interfaces to balance the user experience, a consistent look and feel, and the specifics of each platform. This renders it difficult to maintain a standard look and feel across platforms and often results in a poor user experience. Implementations disclosed herein include a tool that permits a content provider to configure content selection pages with simple user selections and dynamically view the results as emulated user interfaces in various platforms in substantially real time.

One aspect of the present disclosure relates to a system configured for generating a user interface to be displayed on a user device for facilitating navigation by the user amongst plural icons displayed in the user interface. The features of the system are set out in claim 1.

Another aspect of the present disclosure relates to a method for generating a user interface to be displayed on a user device for facilitating navigation by the user amongst plural icons displayed in the user interface. The features of the method are set out in claim 11.

These and other features, and characteristics of the present technology, as well as the methods of operation and functions of the related elements of structure and the combination of parts and economies of manufacture, will become more apparent upon consideration of the following description and the appended claims with reference to the accompanying drawings, all of which form a part of this specification, wherein like reference numerals designate corresponding parts in the various figures. It is to be expressly understood, however, that the drawings are for the purpose of illustration and description only and are not intended as a definition of the limits of the invention. As used in the specification and in the claims, the singular form of "a", "an", and "the" include plural referents unless the context clearly dictates otherwise.

BRIEF DESCRIPTION OF THE DRAWINGS

FIG. 1 illustrates a system configured for generating a user interface to be displayed on a user device for facilitating navigation by the user amongst plural icons displayed in the user interface, in accordance with one or more implementations.

FIG. 2 illustrates a method for generating a user interface to be displayed on a user device for facilitating navigation by the user amongst plural icons displayed in the user interface, in accordance with one or more implementations.

FIGs. 3a and 3b illustrate designer user interfaces, each including an emulation of a user device user interface.

FIGs. 4a, 4b, and 4c illustrate emulations of a user device user interface.

DETAILED DESCRIPTION

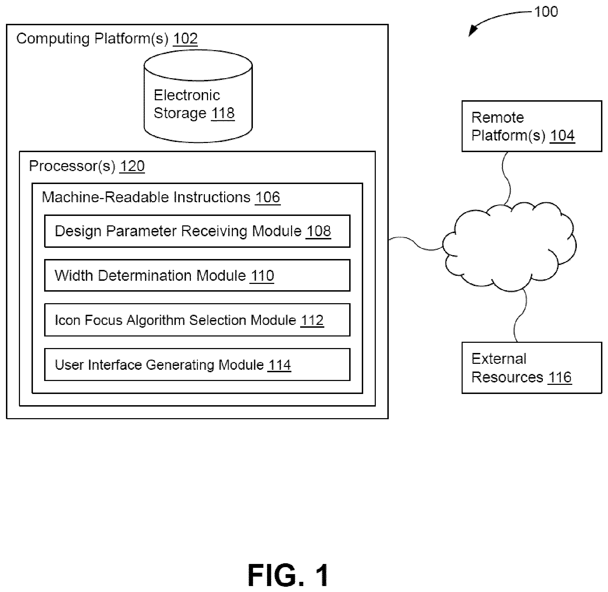

FIG. 1 illustrates a system 100 configured for generating a user interface to be displayed on a user device for facilitating navigation by the user amongst plural icons displayed in the user interface, in accordance with one or more implementations. In some implementations, system 100 may include one or more computing platform(s) 102. Computing platform(s) 102 may be configured to communicate with one or more client computing platforms 104 according to a client/server architecture and/or other architectures. Client computing platform(s) 104 may be configured to communicate with other client computing platforms via computing platform(s) 102 and/or according to a peer-to-peer architecture and/or other architectures. Users may access system 100 via client computing platform(s) 104.

Computing platform(s) 102 may be configured by machine-readable instructions 106 that can be executed by processor(s) 120 to carry out various functions as described below. Machine-readable instructions 106 may include one or more instruction modules. The instruction modules may include computer program modules. The instruction modules may include one or more of design parameter receiving module 108, width determination module 110, icon focus algorithm selection module 112, data structure generating module 114, and/or other instruction modules.

Design parameter receiving module 108 may be configured to receive from a designer, through a user interface on a designer device, a selection of design parameters including at least one of sidebar width, left margin grid start position, left margin padding, number of icons per row, view width of last icon in a row, and extra spacing between icons.

Width determination module 110 may be configured to determine the width of a screen layout of a user interface as a function of a width w of each icon based the design parameters. Icon focus algorithm selection module 112 may be configured to select an icon focus algorithm that corresponds to a computing environment of the user device. The icon focus algorithm may be selected from a set of possible icon focus algorithms and each icon focus algorithm may be specified by an operator of the computing environment of the user device. For example, the user device can be one of remote platform(s) 104. The icon focus algorithm may be a function of width of each icon and determines an expanded width f of an icon when the icon is selected by the user. Selection by the user can include "mousing over" the icon or otherwise navigating an indicator to the icon.

User interface generating module 114 may be configured to solve the selected icon focus algorithm for w and generate at least one data structure representing a user device user interface including rows of icons to be displayed in a user device. The generating may include displaying the user device user interface on the designer device in an environment emulating the layout of the user interface on the user device, i.e. in a manner corresponding to the layout of the user interface on the user device. A designer user interface displayed on a designer device may include a mechanism for parameter selection displayed on the designer device adjacent the emulated user device user interface. The mechanism for parameter selection can include one or more slider bars or other user interface entry/selection elements.

When displayed in the user device user interface and/or in the emulated user device user interface. Each icon, when not selected, may be of the width w. In some implementations, the plural icons may include of at least two different aspect ratios and each row of the user device user interface may include icons having the same aspect ratio. In such a scenario, the receiving and determining steps can be accomplished separately for each aspect ratio. In some implementations, the growth of the specific icon in displayed size may include an increase in the length and width dimensions of the displayed size of the specific icon without changing the aspect ratio of the icon. In some implementations, the generation step may include adjusting an aspect ratio of the specific icon to avoid excessive overlap of the other icons by the specific icon. The generating step may be accomplished in substantial real time in response to receiving design parameters to allow the designer to easily visualize the look and feel of the user device user interface and thus create a consistent and clear user interface across different computing environments. The designer can select different focus algorithms to emulate different platforms on the user device.

In some implementations, computing platform(s) 102, client computing platform(s) 104, and/or external resources 116 may be operatively linked via one or more electronic communication links. For example, such electronic communication links may be established, at least in part, via a network such as the Internet and/or other networks. It will be appreciated that this is not intended to be limiting, and that the scope of this disclosure includes implementations in which computing platform(s) 102, client computing platform(s) 104, and/or external resources 116 may be operatively linked via some other communication media.

A given client computing platform 104 may include one or more processors configured to execute computer program modules. The computer program modules may be configured to enable an expert or user associated with the given client computing platform 104 to interface with system 100 and/or external resources 116, and/or provide other functionality attributed herein to client computing platform(s) 104. By way of non-limiting example, the given client computing platform 104 may include one or more of a desktop computer, a laptop computer, a handheld computer, a tablet computing platform, a NetBook, a smartphone, a smartwatch, a gaming console, and/or other computing platforms.

External resources 116 may include sources of information outside of system 100, external entities participating with system 100, and/or other resources. For example, external resources 116 can be associated with content distribution platform providers and can be the source of the focus algorithms, APIs, and other tools required to present a user interface on a user device. In some implementations, some or all of the functionality attributed herein to external resources 116 may be provided by resources included in system 100.

Computing platform(s) 102 may include electronic storage 118, one or more processors 120, and/or other components. Computing platform(s) 102 may include communication lines, or ports to enable the exchange of information with a network and/or other computing platforms. Illustration of computing platform(s) 102 in FIG. 1 is not intended to be limiting. Computing platform(s) 102 may include a plurality of hardware, software, and/or firmware components operating together to provide the functionality attributed herein to computing platform(s) 102. For example, computing platform(s) 102 may be implemented by a cloud of computing platforms operating together as computing platform(s) 102.

Electronic storage 118 may comprise non-transitory storage media that electronically stores information. The electronic storage media of electronic storage 118 may include one or both of system storage that is provided integrally (i.e., substantially non-removable) with computing platform(s) 102 and/or removable storage that is removably connectable to computing platform(s) 102 via, for example, a port (e.g., a USB port, a firewire port, etc.) or a drive (e.g., a disk drive, etc.). Electronic storage 118 may include one or more of optically readable storage media (e.g., optical disks, etc.), magnetically readable storage media (e.g., magnetic tape, magnetic hard drive, floppy drive, etc.), electrical charge-based storage media (e.g., EEPROM, RAM, etc.), solid-state storage media (e.g., flash drive, etc.), and/or other electronically readable storage media. Electronic storage 118 may include one or more virtual storage resources (e.g., cloud storage, a virtual private network, and/or other virtual storage resources). Electronic storage 118 may store software algorithms, information determined by processor(s) 120, information received from computing platform(s) 102, information received from client computing platform(s) 104, and/or other information that enables computing platform(s) 102 to function as described herein.

Processor(s) 120 may be configured to provide information processing capabilities in computing platform(s) 102. As such, processor(s) 120 may include one or more of a digital processor, an analog processor, a digital circuit designed to process information, an analog circuit designed to process information, a state machine, and/or other mechanisms for electronically processing information. Although processor(s) 120 is shown in FIG. 1 as a single entity, this is for illustrative purposes only. In some implementations, processor(s) 120 may include a plurality of processing units. These processing units may be physically located within the same device, or processor(s) 120 may represent processing functionality of a plurality of devices operating in coordination. Processor(s) 120 may be configured to execute modules 108, 110, 112, and/or 114, and/or other modules. Processor(s) 120 may be configured to execute modules 108, 110, 112, and/or 114, and/or other modules by software; hardware; firmware; some combination of software, hardware, and/or firmware; and/or other mechanisms for configuring processing capabilities on processor(s) 120. As used herein, the term "module" may refer to any component or set of components that perform the functionality attributed to the module. This may include one or more physical processors during execution of processor readable instructions, the processor readable instructions, circuitry, hardware, storage media, or any other components.

It should be appreciated that although modules 108, 110, 112, and/or 114 are illustrated in FIG. 1 as being implemented within a single processing unit, in implementations in which processor(s) 120 includes multiple processing units, one or more of modules 108, 110, 112, and/or 114 may be implemented remotely from the other modules. The description of the functionality provided by the different modules 108, 110, 112, and/or 114 described below is for illustrative purposes, and is not intended to be limiting, as any of modules 108, 110, 112, and/or 114 may provide more or less functionality than is described. For example, one or more of modules 108, 110, 112, and/or 114 may be eliminated, and some or all of its functionality may be provided by other ones of modules 108, 110, 112, and/or 114. As another example, processor(s) 120 may be configured to execute one or more additional modules that may perform some or all of the functionality attributed below to one of modules 108, 110, 112, and/or 114.

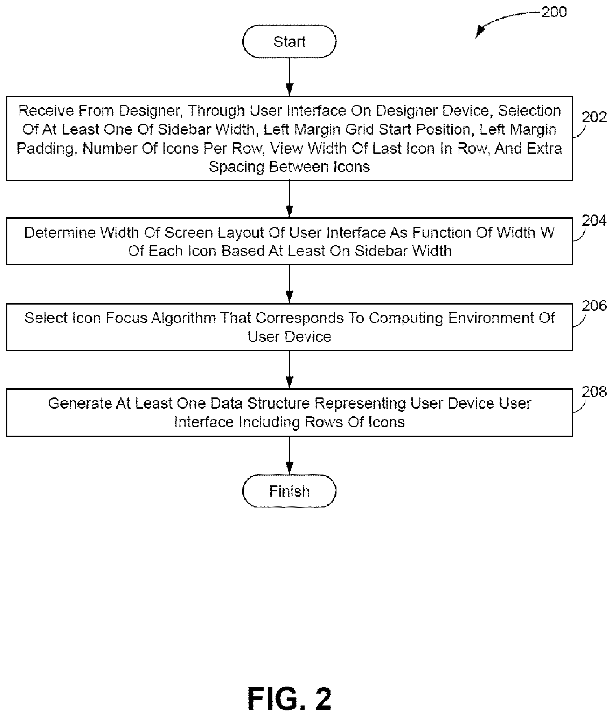

FIG. 2 illustrates a method 200 for generating a user interface to be displayed on a user device for facilitating navigation by the user amongst plural icons displayed in the user interface, in accordance with one or more implementations. The operations of method 200 presented below are intended to be illustrative. In some implementations, method 200 may be accomplished with one or more additional operations not described, and/or without one or more of the operations discussed. Additionally, the order in which the operations of method 200 are illustrated in FIG. 2 and described below is not intended to be limiting.

In some implementations, method 200 may be implemented in one or more processing devices (e.g., a digital processor, an analog processor, a digital circuit designed to process information, an analog circuit designed to process information, a state machine, and/or other mechanisms for electronically processing information). The one or more processing devices may include one or more devices executing some or all of the operations of method 200 in response to instructions stored electronically on an electronic storage medium. The one or more processing devices may include one or more devices configured through hardware, firmware, and/or software to be specifically designed for execution of one or more of the operations of method 200. For example, method 200 can be executed by system 100 of FIG. 1.

An operation 202 may include receiving from a designer, through a user interface on a designer device, a selection of user interface design parameters including at least one of sidebar width, left margin grid start position, left margin padding, number of icons per row, view width of last icon in a row, and extra spacing between icons. Operation 202 may be performed by one or more hardware processors configured by machine-readable instructions including a module that is the same as or similar to design parameter receiving module 108, in accordance with one or more implementations.

An operation 204 may include determining the width of a screen layout of a user interface as a function of a width w of each icon based on the design parameters. Operation 204 may be performed by one or more hardware processors configured by machine-readable instructions including a module that is the same as or similar to width determination module 110, in accordance with one or more implementations.

An operation 206 may include selecting an icon focus algorithm that corresponds to a computing environment of the user device. The icon focus algorithm may be a function of the width of each icon and determines an expanded width f of an icon when selected by the user. Operation 206 may be performed by one or more hardware processors configured by machine-readable instructions including a module that is the same as or similar to icon focus algorithm selection module 112, in accordance with one or more implementations. The selection may be made manually by a designer through the designer user interface.

An operation 208 may include solving the icon focus algorithm for w and generating at least one data structure representing a user device user interface including rows of icons. Operation 208 may be performed by one or more hardware processors configured by machine-readable instructions including a module that is the same as or similar to data structure generating module 114, in accordance with one or more implementations.

By way of non-limiting example, the determining the width of a screen layout of a user interface as a function of a width w of each icon may be in accordance with the following equation:

$$f = x + y + z + a + (w * e) + ((a + h) * e) + p$$

where:

x is the sidebar width,
y is the left margin start position,
z is the left margin padding start position,
a is the minimum padding required for growth to avoid overlap/clipping,
w is the width of each icon, e is the number of icons to be displayed in a row,
h is the extra spacing between the icons in row, and
p is a desired width of last peek item in the row; and

The width f in this example takes can be expressed the sidebar width + left margin position + left side padding (i.e. space) + (width of each icon x number of icons in row) + (spacing between icons x number of icons in a row) + the size of the "peek" icon, i.e. the partial display of a last icon in a row. Dimensions can be specified in pixels or any appropriate unit. When solving the above-noted equation for w (the width of each icon in a row) the result is:

$$w = -\frac{a\,e + a + e\,h - f + p + x + y + z}{e} \quad \text{and } e \neq 0$$

$$a = (f(w) - w) / 2$$

Where f(w) is item width when in focus (zoomed).

Size of the required peek

For Android TV™,: f(w) = w * g, a = ((w*g) - w) / 2
If we solve:

$$f = x + y + z + \frac{1}{2}(w\,g - w) + w\,e + \left(\frac{1}{2}(w\,g - w) + h\right)e + p$$

for w, the result is:

$$w = -\frac{2\,(e\,h - f + p + x + y + z)}{e\,g + e + g - 1} \quad \text{and } e\,g + e + g \neq 1$$

The equation above can be used to determine the width w (and thus the height because we have a predetermined aspect ratio) for each icon in a row of a display on a user device. Further, as noted above, the user device user interface can be emulated on the display of the designer device user interface to allow a designer to interactively adjust design parameters to achieve a desired look and feel that will provide the desired user experience.
For Apple TV™, the focus algorithm is:

$$f(w) = (w * g) + c, a = ((w * g + c) - w) / 2$$

If we solve:

$$f = x + y + z + ((((w*g) + c) - w)/2) + (w*e) + ((((((w*g) + c) - w)/2) + h) * e) + p$$

For w, the result is:

$$w = -\frac{c\,(e + 1) + 2\,(e\,h - f + p + x + y + z)}{e\,g + e + g - 1} \quad \text{and } e\,g + e + g \neq 1$$

If we assume:

$w_p$: Width of a poster item

$w_v$: Width if a video item

$a_p$: Minimum padding between poster items

$a_v$: Minimum padding between poster items

The final a would be, a = max($a_p$, $a_v$)

Now since global a is updated, w, a, b of either posters or videos needs to be recalculated to account for the diff between $a_p$ and $a_v$. This can be accomplished with the algorithm expressed as pseudo code below.

```
if (a_p < a_v) {

    diff = a_v - a_p

    // Recalculate w_p, a_p, b_p

    w_p = w_p - diff - (diff / e_p)

    a_p = a_p + diff

} else {

    diff = a_p - a_v

    // Recalculate w_v, a_v, b_v

    w_v = w_v - diff - (diff / e_v)

    a_v = a_v + diff

}
```

The desired aspect ratio, r = (width/height) should be checked before finalizing w and a. If the height is greater than the width, the growth effect will overlap vertically since the calculated b (spacing between items is with respect to width). Therefore, the aspect ratio of the icons must be considered. For example, consider posters are in aspect ratio 1:2 (w:h), growth effect (i.e. enlargement) is 110% and the calculations above resulted in w = 100 (thus h = 200) and a = 5. This, a, is enough width wise, as w will grow from 100 to 110, 5 to each side. However, h will grow from 200 to 220, 10 to each side. Therefore, spacing between the items, value a = 5, is not enough if undesirable overlap of icons is to be avoided. Therefore, if h > w, a must be multiplied by 1/r. The resulting final formula will be:

```
if (r < 1.0) {

    // height > width by aspect ratio

    f=x+y+z+(a/r)+(m*e)+(((a/r)+h)*(e-1))+(a/r)+v+u

    // See on wolframalpha

    // Substitute platform wise a in above equations and solve for w

    a = ((f(m) - m) / 2) / r

} else {

    // height >= width by aspect ratio

    f=x+y+z+a+(m*e)+((a+h)*(e-1))+a+v+u
```

An example of the actual code is set forth below. The code example is written in Kotlin, a cross-platform, statically typed, general-purpose programming language with type inference. Kotlin is designed to interoperate fully with Java, and the JVM version of its standard library depends on the Java Class Library. Accordingly, this code will run in an Android environment.

```
private fun updateSizes() {
    // w = (-2 * (eh - f + p + x + y + z)) / (eg + e + g - 1)
    val allW = ArrayList<Float>()
    val allA = ArrayList<Float>()
    allPresenters.forEachIndexed { index, row ->
        val w = (-2.0f * (e[index] * h - f + p + x + y + z)) /
            (e[index] * g + e[index] + g - 1.0f)
        val a = ((w * g) - w) / 2.0f
        row.itemWidthMutable.value = w.roundToInt()
        row.itemSpacingMin.value = a.roundToInt()
        allW.add(w)
        allA.add(a)
    }

    val aMax = allA.max() ?: 0f
    allPresenters.forEachIndexed { index, row ->
        if (allA[index] < aMax) {
            val diff = aMax - allA[index]
            val w = allW[index] - diff - (diff / row.visibleItemsInRow.toFloat())
            val a = allA[index] + diff
            row.itemWidthMutable.value = w.roundToInt()
            row.itemSpacingMin.value = a.roundToInt()
        }
    }

    minPadding.value = aMax.roundToInt()
}
```

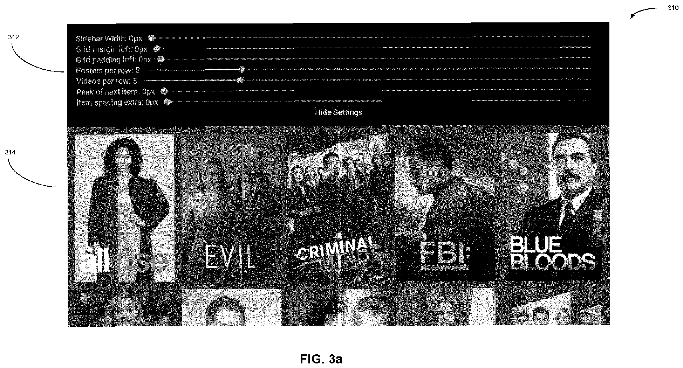

FIG. 3a illustrates an example of a designer user interface to be displayed on the computing device, computing platform 102 of FIG. 1 for example, of a party designing the user device user interfaces. Designer user interface 310 includes design parameter input section 312 including plural sliders corresponding to respective design parameters that can be determined/set/input by a designer. Designer user interface 310 also includes an emulation 314 of a user device user interface including rows of icons arranged as they would appear in the emulated user device user interface based on the selected design parameters. In the example of FIG 3a, there is no sidebar (sidebar width = 0), no grid margin (grid margin left = 0), no grid padding (grid padding left = 0) there are 5 icons in a row for both posters and videos, no peek icon (peek of next icon = 0) and no extra spacing (item spacing extra = 0).

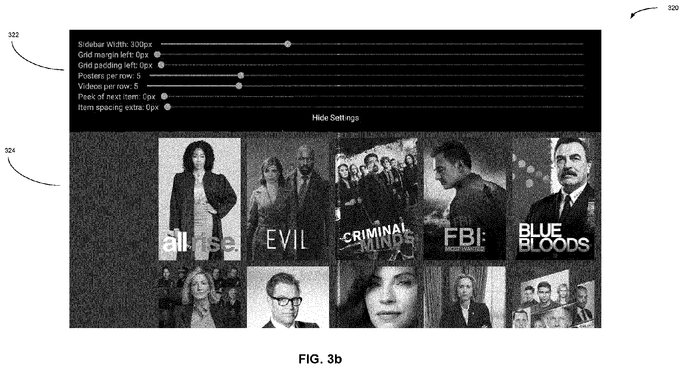

FIG. 3b illustrates another example of a designer user interface to be displayed on the computing device, computing platform 102 of FIG. 1 for example, of a party designing the user device user interfaces. Designer user interface 320 includes design parameter input section 322 including plural sliders corresponding to respective design parameters that can be determined/set/input by a designer. Designer user interface 320 also includes an emulation 324 of a user device user interface including rows of icons arranged as they would appear in the emulated user device user interface based on the selected design parameters. In the example of FIG 3b, there is a sidebar that is 300 pixels wide (sidebar width = 300), no grid margin (grid margin left = 0), no grid padding (grid padding left = 0) there are 5 icons in a row for both posters and videos, no peek icon (peek of next icon = 0) and no extra spacing (item spacing extra = 0). It can be seen that merely changing the size of the sidebar (from 0 in FIG. 3a to 300 in FIG. 3b) results in a very different size of the icons. However, by using the methods described above, the icons are sized to allow for focus/growth/enlargement, in accordance with the selected icon focus algorithm corresponding to a potential user platform, without excessively overlapping adjacent icons.

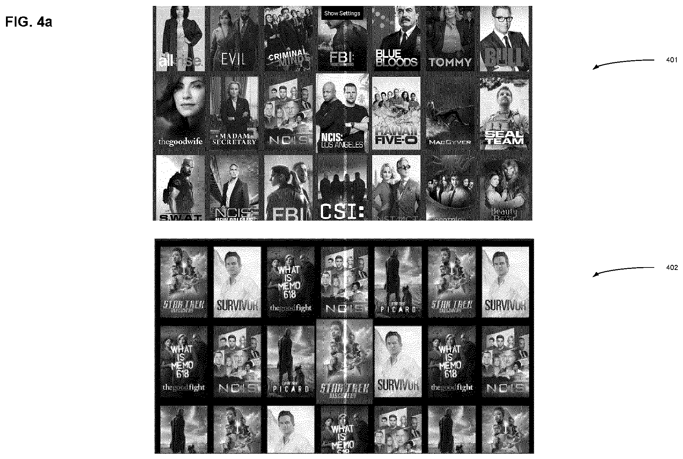

FIG. 4a illustrates two examples of emulated user device user interfaces that can be displayed on the designer device user interface. Emulated user device user interface 401 has been designed in accordance with the icon focus algorithm of Android TV™ and emulated user device user interface 402 has been designed in accordance with the icon focus algorithm of Apple TV™. It can be seen that each of user interface 401 and 402 have been designed to have 7 icons in a row and a positive spacing (i.e. no overlap) for the focused icon (in the center of the user interface in this example). Notwithstanding the very different focus algorithms and other platform specifics, the designer was able to provide a very consistent look and feel to the user interfaces across the different platforms. Therefore, the resulting user device user interfaces, as rendered on the user devices, will provide an improved user experience. While it may have been possible to achieve the result with conventional design techniques through a great deal of trial and error, the implementations described herein have simplified the design process and reduced the time required to create the user interfaces in the desired manner.

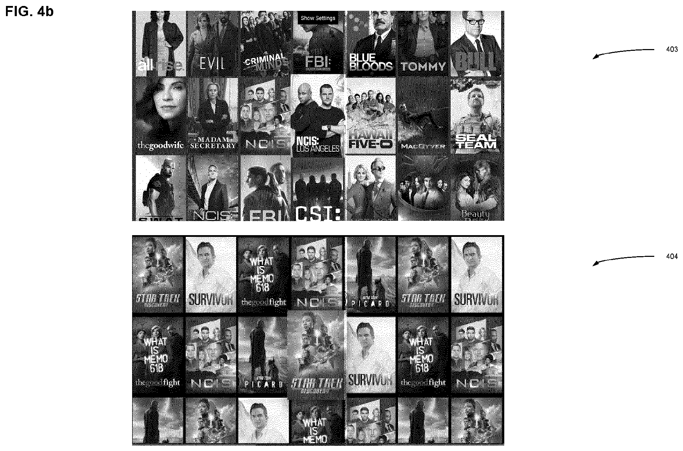

FIG. 4b also illustrates two examples of emulated user device user interfaces that can be displayed on the designer device user interface. Emulated user device user interface 403 has been designed in accordance with the icon focus algorithm of Android TV™ and emulated user device user interface 404 has been designed in accordance with the icon focus algorithm of Apple TV™. It can be seen that each of user interface 403 and 404 have been designed to have 7 icons in a row and a negative spacing (i.e. some overlap) for the focused icon (in the center of the user interface in this example). Notwithstanding the very different focus algorithms and other platform specifics, the designer was able to provide a very consistent look and feel to the user interfaces across the different platforms.

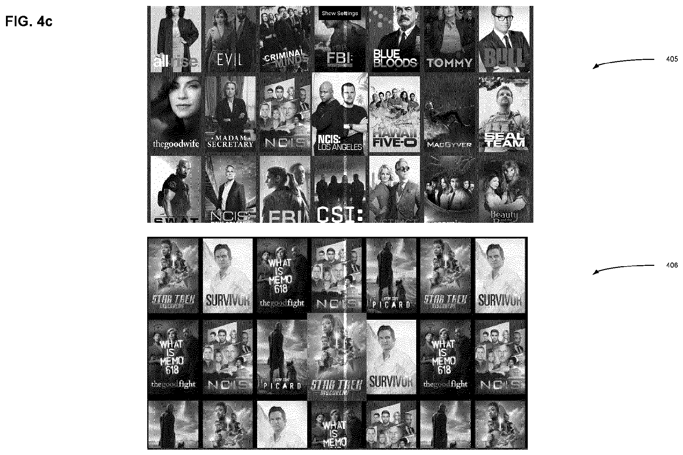

FIG. 4c also illustrates two examples of emulated user device user interfaces that can be displayed on the designer device user interface. Emulated user device user interface 405 has been designed in accordance with the icon focus algorithm of Android TV™ and emulated user device user interface 406 has been designed in accordance with the icon focus algorithm of Apple TV™. It can be seen that each of user interface 405 and 406 have been designed to have 7 icons in a row and a zero spacing (i.e. borders touch and adjacent icon) for the focused icon (in the center of the user interface in this example). Notwithstanding the very different focus algorithms and other platform specifics, the designer was able to provide a very consistent look and feel to the user interfaces across the different platforms.

As shown in FIGs. 4a, 4b, and 4c, the resulting user device user interfaces, as rendered on the user devices, will provide an improved user experience because the user will have a consistent look and feel across various platforms, notwithstanding the very different user interface parameters for the platforms. Of course, the desingner could have selected any number of icons and any type of spacing to achieve the desired look and feel. While it may have been possible to achieve this result with conventional design techniques through a great deal of trial and error, the implementations described herein have simplified the design process and reduced the time required to create the user interfaces in the desired manner by providing a real time user interface design and comparison tool.

Although the present technology has been described in detail for the purpose of illustration based on what is currently considered to be the most practical and preferred implementations, it is to be understood that such detail is solely for that purpose and that the technology is not limited to the disclosed implementations, but, on the contrary, is intended to cover modifications and equivalent arrangements that are within the scope of the appended claims. For example, it is to be understood that the present technology contemplates that, to the extent possible, one or more features of any implementation can be combined with one or more features of any other implementation.

**Claims**

1.   A system (100) configured for generating a user device user interface to be displayed on a user device for facilitating navigation by the user amongst plural icons displayed in the user interface, the system comprising:
one or more hardware processors (120) configured by machine-readable instructions (106) to:

receive from a designer, through a designer device user interface on a designer device, a selection of design parameters including at least one of sidebar width, left margin grid start position, left margin padding, number of icons per row, view width of last icon in a row, and extra spacing between icons;

determine a first function defining a width of a screen layout of a user interface as a function of a width, w, of each icon, an expanded width, W, of an icon when the icon is selected by the user, and the design parameters; select an icon focus algorithm, f(w), that corresponds to a computing environment of the user device, wherein the icon focus algorithm is a second function of the width, w, of each icon and determines the expanded width, W; solve the first function for w using the selected icon focus algorithm, f(w); and generate at least one data structure representing a user device user interface having a screen layout and including rows of icons, wherein each icon, when not selected, is of the width w, and each icon, when selected, is of the expanded width, W, determined by the icon focus algorithm, and wherein generating the at least one data structure includes displaying an emulation of the user device user interface on the designer device user interface.

2. The system (100) of claim 1, wherein the icon focus algorithm is specified by an operator of the computing environment of the user device.

3. The system (100) of claim 1 or 2, wherein the determining the width of a screen layout of a user interface as a function of a width w of each icon is in accordance with the following equation:

$$width\ of\ the\ screen\ layout = x + y + z + a + (w * e) + ((a + h) * e) + p$$

where x is the sidebar width,
y is the left margin start position,
z is the left margin padding start position,
a is the minimum padding required for growth to avoid overlap/clipping,
w is the width of each icon,
e is the no of icons to be displayed in a row,
h is the extra spacing between the icons in row, and
p is a desired width of last peek item in the row.

4. The system (100) of any preceding claim, wherein the plural icons include of at least two different aspect ratios.

5. The system (100) of any preceding claim, wherein each row of the user device user interface includes icons having the same aspect ratio and the receiving and determining steps are accomplished separately for each aspect ratio.

6. The system (100) of claim 5, wherein the generating step is accomplished in substantial real time in response to the receiving step.

7. The system (100) of any preceding claim, wherein the expanded width of the specific icon corresponds to an increase in the length and width dimensions of the displayed size of the specific icon.

8. The system (100) of any of claims 2 to 7, wherein the designer device user interface includes a mechanism for selecting the design parameters displayed adjacent to the emulation of the user device.

9. The system (100) of claim 8, wherein the mechanism for selecting includes plural slider bars each corresponding to a design parameter.

10. The system (100) of any preceding claim, wherein the generation step comprises adjusting an aspect ratio of the specific icon to avoid overlap of the other icons by the specific icon.

11. A method for generating a user device user interface to be displayed on a user device for facilitating navigation by the user amongst plural icons displayed in the user interface, the method comprising:

receiving from a designer, through a designer device user interface on a designer device, a selection of design parameters including at least one of sidebar width, left margin grid start position, left margin padding, number of icons per row, view width of last icon in a row, and extra spacing between icons; determining a first function defining a width of a screen layout of a user interface as a function of a width, w, of each icon, an expanded width, W, of an icon when the icon is selected by the user,, and the design parameters; selecting an icon focus algorithm, f(w), that corresponds to a computing environment of the user device, wherein the icon focus algorithm is a second function of the width, w, of each icon and determines the expanded width, W;

solving the first function for w using the selected icon focus algorithm, f(w); and
generating at least one data structure representing a user device user interface including rows of icons, wherein each icon, when selected, is of the width w, and each icon, when selected, is of the expanded width, W, determined by the icon focus algorithm, and wherein generating the at least one data structure includes displaying an emulation of the user device user interface on the designer device user interface.

12. The method of claim 11, wherein the icon focus algorithm is specified by an operator of the computing environment of the user device.

13. The method of claim 11 or claim 12, wherein the determining the width of a screen layout of a user interface as a function of a width w of each icon is in accordance with the following equation:

$$width\ of\ the\ screen\ layout = x + y + z + a + (w * e) + ((a + h) * e) + p$$

where x is the sidebar width,
y is the left margin start position,
z is the left margin padding start position,
a is the minimum padding required for growth to avoid overlap/clipping,
w is the width of each icon,
e is the no of icons to be displayed in a row,
h is the extra spacing between the icons in row, and
p is a desired width of last peek item in the row.

**Patentansprüche**

1. System (100), das konfiguriert ist für die Erstellung einer Benutzeroberfläche eines Benutzergeräts, um einem Benutzer das Navigieren zwischen Symbolen zu erleichtern, die auf der Benutzeroberfläche angezeigt sind, wobei das System umfasst:
einen oder mehrere Hardware-Prozessoren (120), die durch maschinenlesbare Anweisungen (106) eingerichtet sind

zum Empfangen einer Auswahl von Design-Parametern, umfassend zumindest einen der Parameter: Sidebar-Breite, linke Startposition des Grids, linker Randabstand, Anzahl von Symbolen je Reihe, Ansichtsbreite des letzten Symbols in einer Reihe und zusätzlicher Abstand zwischen Symbolen von einem Designer über eine Benutzeroberfläche eines Designer-Geräts auf einem Designer-Gerät;
zum Bestimmen einer ersten Funktion, die eine Breite eines Bildschirmlayouts einer Benutzeroberfläche als Funktion einer Breite w jedes Symbols, einer erweiterten Breite W eines Symbols, wenn das Symbol vom Benutzer ausgewählt wird, und der Designparameter definiert;
zum Wählen eines Symbol-Fokus-Algorithmus f(w), der einer Rechenumgebung des Benutzergeräts entspricht, wobei der Symbol-Fokus-Algorithmus eine zweite Funktion der Breite w jedes Symbols ist und die erweiterte Breite W bestimmt;
zum Auflösen der ersten Funktion nach w unter Anwendung des gewählten Symbol-Fokus-Algorithmus f(w); und
zum Erzeugen zumindest einer Datenstruktur, die eine Benutzeroberfläche eines Benutzergeräts mit einem Bildschirmlayout repräsentiert und Symbolreihen aufweist, wobei jedes Symbol, wenn es nicht gewählt ist, die Breite w aufweist, und jedes Symbol, wenn es gewählt wurde, die erweiterte Breite W aufweist, die durch den Symbol-Fokus-Algorithmus bestimmt wird, und wobei das Erzeugen der zumindest einen Datenstruktur das Anzeigen einer Emulation der Benutzeroberfläche des Benutzergeräts auf der Benutzeroberfläche des Designer-Geräts umfasst.

2. System (100) nach Anspruch 1, wobei der Symbol-Fokus-Algorithmus durch einen Bediener der Rechenumgebung des Benutzergeräts spezifiziert wird.

3. System (100) nach Anspruch 1 oder 2, wobei das Bestimmen der Breite eines Bildschirm-Layouts einer Benutzeroberfläche als Funktion einer Breite w jedes Symbols gemäß der folgenden Gleichung erfolgt:

$$Breite\ des\ Bildschirm\text{-}Layout = x + y + z + a + (w * e) + ((a + h) * e) + p$$

wobei x die Sidebar-Breite,
y die Startposition des linken Rands,
z die Startposition des linken Randabstands,
a den für die Vergrößerung erforderlichen Mindestabstand zur Vermeidung von Überlappung/Abschneiden,
w die Breite jedes Symbols,
e die Anzahl von in einer Reihe anzuzeigenden Symbolen,
h den zusätzlichen Abstand zwischen Symbolen in einer Reihe und
p eine gewünschte Breite des letzten sichtbaren Elements in der Reihe bezeichnet.

4. System (100) nach einem der vorangehenden Ansprüche, wobei die mehreren Symbole mindestens zwei verschiedene Seitenverhältnisse aufweisen.

5. System (100) nach einem der vorangehenden Ansprüche, wobei jede Reihe der Benutzeroberfläche des Benutzergeräts Symbole mit dem gleichen Seitenverhältnis enthält und die Schritte des Empfangens und Bestimmens für jedes Seitenverhältnis getrennt durchgeführt werden.

6. System (100) nach Anspruch 5, wobei der Schritt des Erzeugens in Reaktion auf den Empfangsschritt im Wesentlichen in Echtzeit durchgeführt wird.

7. System (100) nach einem der vorangehenden Ansprüche, wobei die erweiterte Breite des spezifischen Symbols einer Zunahme der Längen- und Breitendimensionen der angezeigten Größe des spezifischen Symbols entspricht.

8. System (100) nach einem der Ansprüche 2 bis 7, wobei die Benutzeroberfläche des Designer-Geräts einen Mechanismus zum Wählen der Designparameter umfasst, die neben der Emulation des Benutzergeräts angezeigt werden.

9. System (100) nach Anspruch 8, wobei der Mechanismus zum Wählen mehrere Schieberegler umfasst, die jeweils einem Designparameter entsprechen.

10. System (100) nach einem der vorangehenden Ansprüche, wobei der Erzeugungsschritt das Einstellen eines Seitenverhältnisses des spezifischen Symbols zur Vermeidung einer Überlappung der anderen Symbole durch das spezifische Symbol umfasst.

11. Verfahren zur Erstellung einer Benutzeroberfläche eines Benutzergeräts, die auf einem Benutzergerät anzuzeigen ist, um einem Benutzer das Navigieren zwischen Symbolen zu erleichtern, die auf der Benutzeroberfläche angezeigt sind, wobei das Verfahren umfasst:

Empfangen einer Auswahl von Design-Parametern, umfassend zumindest einen der Parameter: Sidebar-Breite, Grid-Startposition linker Rand, linker Randabstand, Anzahl von Symbolen je Reihe, Ansichtsbreite des letzten Symbols in einer Reihe und zusätzlicher Abstand zwischen Symbolen von einem Designer über eine Benutzeroberfläche eines Designer-Geräts auf einem Designer-Gerät;
Bestimmen einer ersten Funktion, die eine Breite eines Bildschirmlayouts einer Benutzeroberfläche als Funktion einer Breite w jedes Symbols, einer erweiterten Breite W eines Symbols, wenn das Symbol vom Benutzer ausgewählt wird, und der Designparameter definiert;
Wählen eines Symbol-Fokus-Algorithmus f(w), der einer Rechenumgebung des Benutzergeräts entspricht, wobei der Symbol-Fokus-Algorithmus eine zweite Funktion der Breite w jedes Symbols ist und die erweiterte Breite W bestimmt;
Auflösen der ersten Funktion nach w unter Anwendung des gewählten Symbol-Fokus-Algorithmus f(w); und
Erzeugen zumindest einer Datenstruktur, die eine Benutzeroberfläche eines Benutzergeräts mit Symbolreihen darstellt, wobei jedes Symbol, wenn es gewählt wird, die Breite w aufweist, und jedes Symbol, wenn es gewählt wird, die erweiterte Breite W aufweist, die durch den Symbol-Fokus-Algorithmus bestimmt wird, und wobei das Erzeugen der zumindest einen Datenstruktur das Anzeigen einer Emulation der Benutzeroberfläche des Benutzergeräts auf der Benutzeroberfläche des Designer-Geräts umfasst.

12. Verfahren nach Anspruch 11, wobei der Symbol-Fokus-Algorithmus von einem Bediener der Rechenumgebung des Benutzergeräts spezifiziert wird.

13. Verfahren nach Anspruch 11 oder 12, wobei das Bestimmen der Breite eines Bildschirm-Layouts einer Benutzeroberfläche als Funktion einer Breite w jedes Symbols gemäß der nachstehenden Gleichung erfolgt:

$$Breite\ des\ Bildschirm\text{-}Layout = x + y + z + a + (w*e) + ((a + h)*e) + p$$

wobei x die Sidebar-Breite,
y die Startposition des linken Rands,
z die Startposition des linken Randabstands,
a den für die Vergrößerung erforderlichen Mindestabstand zur Vermeidung von Überlappung/Abschneiden,
w die Breite jedes Symbols,
e die Anzahl von in einer Reihe anzuzeigenden Symbolen,
h den zusätzlichen Abstand zwischen Symbolen in einer Reihe und
p eine gewünschte Breite des letzten sichtbaren Elements in der Reihe bezeichnet.

## Revendications

1. Un système (100) configuré pour créer une interface d'utilisateur de dispositif utilisateur à afficher sur un dispositif d'utilisateur pour faciliter la navigation par l'utilisateur parmi plusieurs icônes affichées dans l'interface d'utilisateur, le système comprenant :
un ou plusieurs processeurs (120) en matériel configurés par des instructions (106) exécutables par machine pour :

recevoir d'un concepteur, par une interface d'utilisateur de dispositif de concepteur sur un dispositif de concepteur, une sélection de paramètres de conception incluant au moins une largeur de barre latérale, une position de début de grille de marge de gauche, un remplissage de marge de gauche, un nombre d'icônes par rangée, une largeur de vue d'une dernière icône d'une rangée et des intervalles supplémentaires entre des icônes ;
déterminer une première fonction définissant une largeur d'une maquette d'écran d'une interface d'utilisateur en fonction d'une largeur, w, de chaque icône, d'une largeur agrandie, W, d'une icône lorsque l'icône est sélectionnée par l'utilisateur, et des paramètres de conception ;
sélectionner un algorithme, f(w) de foyer d'icône, qui correspond à un environnement informatique du dispositif d'utilisateur, dans lequel l'algorithme de foyer d'icône est une deuxième fonction de la largeur, w, de chaque icône et détermine la largeur agrandie, W ;
résoudre la première fonction pour w en utilisant l'algorithme f(w) de foyer d'icône sélectionné ; et
créer au moins une structure de données représentant une interface d'utilisateur de dispositif d'utilisateur ayant une maquette d'écran et incluant des rangées d'icônes, dans lequel chaque icône, lorsqu'elle n'est pas sélectionnée, est de la largeur w, et chaque icône, lorsqu'elle est sélectionnée, est de la largeur agrandie, W, déterminée par l'algorithme de foyer d'icône et dans lequel créer la au moins une structure de données comprend afficher une émulation de l'interface d'utilisateur du dispositif d'utilisateur sur l'interface d'utilisateur du dispositif concepteur.

2. Le système (100) de la revendication 1, dans lequel l'algorithme de foyer d'icône est précisé par l'opérateur de l'environnement informatique du dispositif d'utilisateur.

3. Le système (100) de la revendication 1 ou 2, dans lequel la détermination de la largeur d'une maquette d'écran d'une interface d'utilisateur en fonction de la largeur w de chaque icône est effectuée conformément à l'équation suivante :

$$largeur\ de\ la\ maquette\ d'écran = x+y+z+a+(w*e)+((a+h)*e)+p$$

dans laquelle x est la largeur de barre latérale,
y est la position de début de marge de gauche,
z est la position de début de remplissage de marge de gauche, a est le remplissage minimum exigé pour la croissance afin d'empêcher un chevauchement/coupure,
w est la largeur de chaque icône,
e est qu'il n'y a pas d'icône à afficher dans une rangée,
h est l'espacement supplémentaire entre les icônes d'une rangée, et
p est la largeur souhaitée d'un dernier élément de pic de la rangée.

**4.** Le système (100) de l'une quelconque des revendications précédentes, dans lequel plusieurs icônes comprennent au moins deux rapports d'aspect différents.

**5.** Le système (100) de l'une quelconque des revendications précédentes, dans lequel chaque rangée de l'interface d'utilisateur du dispositif d'utilisateur comprend des icônes ayant le même rapport d'aspect et les stades de réception et de détermination sont accomplis séparément pour chaque rapport d'aspect.

**6.** Le système (100) de la revendication 5, dans lequel le stade de création est accompli, sensiblement en temps réel en réaction au stade de réception.

**7.** Le système (100) de l'une quelconque des revendications précédentes, dans lequel la largeur agrandie de l'icône spécifique correspond à une augmentation des dimensions en longueur et en largeur de la dimension affichée de l'icône spécifique.

**8.** Le système (100) de l'une quelconque des revendications 2 à 7, dans lequel l'interface d'utilisateur du dispositif de concepteur comprend un mécanisme pour sélectionner les paramètres de conception affichés au voisinage de l'émulation du dispositif d'utilisateur.

**9.** Le système (100) de la revendication 8, dans lequel le mécanisme de sélection comprend plusieurs talons justificateurs correspondant chacun à un paramètre de conception.

**10.** Le système (100) de l'une quelconque des revendications précédentes, dans lequel le stade de création comprend régler un rapport d'aspect de l'icône spécifique pour éviter un chevauchement des autres icônes par l'icône spécifique.

**11.** Un procédé de création d'une interface d'utilisateur d'un dispositif utilisateur à afficher sur un dispositif d'utilisateur pour faciliter la navigation par l'utilisateur parmi plusieurs icônes affichées dans l'interface d'utilisateur, le procédé comprenant :

  recevoir d'un concepteur, par une interface d'utilisateur de dispositif de concepteur sur un dispositif de concepteur, une sélection de paramètres de conception incluant au moins une largeur de barre latérale, une position de début de grille de marge de gauche, un remplissage de marge de gauche, un nombre d'icônes par rangée, une largeur de vue, une dernière icône d'une rangée et des intervalles supplémentaires entre des icônes ;
  déterminer une première fonction définissant une largeur d'une maquette d'écran d'une interface d'utilisateur en fonction d'une largeur, w, de chaque icône, d'une largeur agrandie, W, d'une icône lorsque l'icône est sélectionnée par l'utilisateur, et des paramètres de conception ;
  sélectionner un algorithme, f(w) de foyer d'icône, qui correspond à un environnement informatique du dispositif d'utilisateur, dans lequel l'algorithme de foyer d'icône est une deuxième fonction de la largeur, w, de chaque icône et détermine la largeur agrandie, W ;
  résoudre la première fonction pour w en utilisant l'algorithme f(w) de foyer d'icône sélectionné ; et
  créer au moins une structure de données représentant une interface d'utilisateur de dispositif d'utilisateur ayant une maquette d'écran et incluant des rangées d'icônes, dans lequel chaque icône, lorsqu'elle n'est pas sélectionnée, est de la largeur w, et chaque icône, lorsqu'elle est sélectionnée, est de la largeur agrandie, W, déterminée par l'algorithme de foyer d'icône et dans lequel créer la au moins une structure de données comprend afficher une émulation de l'interface d'utilisateur du dispositif d'utilisateur sur l'interface d'utilisateur du dispositif concepteur.

**12.** Le système (100) de la revendication 11, dans lequel l'algorithme de foyer d'icône est précisé par l'opérateur de l'environnement informatique du dispositif d'utilisateur.

**13.** Le système (100) de la revendication 11 ou de la revendication 12, dans lequel la détermination de la largeur d'une maquette d'écran d'une interface d'utilisateur en fonction de la largeur w de chaque icône est effectuée conformément à l'équation suivante :

$$largeur\ de\ la\ maquette\ d'écran = x+y+z+a+(w*e)+((a+h)*e)+p$$

dans laquelle x est la largeur de barre latérale,

y est la position de début de marge de gauche,

z est la position de début de remplissage de marge de gauche, a est le remplissage minimum exigé pour la croissance afin d'empêcher un chevauchement/coupure,

w est la largeur de chaque icône,

e est qu'il n'y a pas d'icône à afficher dans une rangée,

h est l'espacement supplémentaire entre les icônes d'une rangée, et

p est la largeur souhaitée d'un dernier élément de pic de la rangée.

100

Computing Platform(s) 102

Electronic
Storage 118

Processor(s) 120

Machine-Readable Instructions 106

Design Parameter Receiving Module 108

Width Determination Module 110

Icon Focus Algorithm Selection Module 112

User Interface Generating Module 114

Remote
Platform(s) 104

External
Resources 116

# FIG. 1

—200

Start

Receive From Designer, Through User Interface On Designer Device, Selection Of At Least One Of Sidebar Width, Left Margin Grid Start Position, Left Margin Padding, Number Of Icons Per Row, View Width Of Last Icon In Row, And Extra Spacing Between Icons — 202

Determine Width Of Screen Layout Of User Interface As Function Of Width W Of Each Icon Based At Least On Sidebar Width — 204

Select Icon Focus Algorithm That Corresponds To Computing Environment Of User Device — 206

Generate At Least One Data Structure Representing User Device User Interface Including Rows Of Icons — 208

Finish

# FIG. 2

FIG. 3a

FIG. 3b

FIG. 4a

401

402

**FIG. 4b**

403

404

**FIG. 4c**

405

406

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63024186
- EP 2124142 A